# EUROPÄISCHE PATENTANMELDUNG

(11) **EP 3 354 991 A1**
(43) Veröffentlichungstag der Anmeldung: **01.08.2018**
(21) Anmeldenummer: 18153130.2
(22) Anmeldetag: 24.01.2018
(51) Int. Cl.: F24D 10/00, F24D 11/00, F24D 19/10

(54) **WÄRMEVERTEILNETZ UND VERFAHREN ZUR WÄRMEVERTEILUNG**

(30) Priorität: 25.01.2017 DE 102017201197
(71) Anmelder: Fraunhofer-Gesellschaft zur Förderung der angewandten Forschung e.V., 80686 München (DE)
(72) Erfinder: Elci, Mehmet, 79106 Freiburg (DE)
(74) Vertreter: Friese Goeden Patentanwälte PartGmbB

(57) **Zusammenfassung**

Die Erfindung betrifft ein Wärmeverteilnetz (5) mit zumindest einer Vorlaufleitung (51) und zumindest einer Rücklaufleitung (52) und mit zumindest einem ersten Verbraucher (1) und zumindest einem zweiten Verbraucher (2), welche jeweils einen zugeordneten Speicher (11, 21) enthalten, welche dazu eingerichtet sind, Wärme über das Wärmeverteilnetz (5) von einem Verbraucher (1, 2) zum anderen Verbraucher (2, 1) zu übertragen. Weiterhin betrifft die Erfindung ein Verfahren zur Wärmeverteilung innerhalb eines Wärmeverteilnetzes (5).

## Beschreibung

Die Erfindung betrifft ein Wärmeverteilnetz mit zumindest einer Vorlaufleitung und zumindest einer Rücklaufleitung und mit zumindest einem ersten Verbraucher und zumindest einem zweiten Verbraucher, welche jeweils einen zugeordneten Speicher enthalten. Weiterhin betrifft die Erfindung ein Verfahren zur Wärmeverteilung innerhalb eines Wärmeverteilnetzes, bei welchem in einem ersten Betriebszustand zwischen einem zweiten Verbraucher und einer Heiz- oder Kühlstation Wärme übertragen wird. Vorrichtungen und Verfahren der eingangs genannten Art können zur Klimatisierung von Gebäuden mittels Fernwärme oder Fernkälte eingesetzt werden. Dabei unterscheiden sich beide Anwendungsfälle lediglich durch die Richtung des Wärmeflusses, nämlich entweder von der Zentrale zum Gebäude oder vom Gebäude zur Zentrale. Diese wirkt somit entweder als Wärmequelle oder als Wärmesenke.

Aus Bernd Glück: Heizwassernetze für Wohn- und Industriegebiete, Berlin: VEB Verlag für Bauwesen 1984 und Frankfurt/M.: Verlags- und Wirtschaftsgesellschaft der Elektrizitätswerke mbH 1985, ISBN 3-8022-0095-0, ist bekannt, ein Wärmeverteilnetz als Rohrleitungsnetz aufzubauen und zu betreiben. In den Rohrleitungen zirkuliert ein flüssiger Wärmeträger, meist Wasser, welches in einer Heizstation erwärmt und zu den Verbrauchern transportiert wird. In den Verbrauchern wird dem Wärmeträger Wärme entnommen und zu Heizzwecken des jeweiligen Gebäudes verwendet. der auf diese Weise abgekühlte Wärmeträger zirkuliert zurück zur Heizstation und wird dort erneut erwärmt. Auf diese Weise können kleinere Gemeinden oder Stadtviertel zentral mit Heizwärme versorgt werden.

Dieses bekannte Wärmeverteilnetz weist jedoch den Nachteil auf, dass auch in Zeiten geringer Wärmeabnahme, beispielsweise im Sommer, Wärmeträger zirkuliert werden muss. Ein vollständiges Abstellen des Wärmeverteilnetzes verbietet sich, da in den Sommermonaten zwar die Wärmeanforderung der Verbraucher reduziert ist, aber nicht vollständig entfällt, beispielsweise zur Brauchwassererwärmung. Gleichwohl weist das Wärmeverteilnetz aufgrund der geringen Wärmeabnahme vergleichsweise hohe Verluste auf, welche den Gesamtwirkungsgrad im Jahresmittel reduzieren.

Zur Lösung dieses Problems schlägt der Stand der Technik beispielsweise die Wärmedämmungen der Rohre des Wärmeverteilnetzes vor, um auf diese Weise die Wärmeverluste zu reduzieren. Alternativ oder zusätzlich kann das Wärmeverteilnetz temporär abgeschaltet werden. Die einzelnen Verbraucher weisen in diesem Fall Speicher auf, welche eine gewisse Wärmemenge zwischenspeichern, um die Abschaltzeit des Wärmeverteilnetzes zu überbrücken. Auch in diesem Fall muss das Wärmeverteilnetz jedoch wieder in Betrieb genommen werden, wenn der Verbraucher mit dem höchsten Wärmebedarf oder der geringsten Speicherkapazität einen Wärmebedarf anmeldet. Dann muss jedoch erst das in den Rohrleitungen befindliche kalte Wärmeträger vollständig erwärmt bzw. ausgetauscht werden, bis Wärme beim betreffenden Verbraucher ankommt. Mit der Länge der Rohrleitungen des Wärmeverteilnetzes steigt damit die Gefahr, dass Wärme nicht hinreichend schnell geliefert werden kann und damit die Versorgungssicherheit gefährdet wird.

Ausgehend vom Stand der Technik liegt der Erfindung daher die Aufgabe zugrunde, ein Wärmeverteilnetz und ein Verfahren zur Wärmeverteilung anzugeben, welches bei unveränderter Versorgungssicherheit geringere Wärmeverluste in Schwachlastzeiten ermöglicht.

Die Aufgabe wird erfindungsgemäß durch eine Vorrichtung gemäß Anspruch 1 und ein Verfahren nach Anspruch 8 gelöst. Vorteilhafte Weiterbildungen der Erfindung finden sich in den Unteransprüchen.

Erfindungsgemäß wird ein Wärmeverteilnetz mit zumindest einer Vorlaufleitung und zumindest einer Rücklaufleitung vorgeschlagen. Das Wärmeverteilnetz ist dazu eingerichtet, einen Wärmeträger zu zirkulieren, um auf diese Weise Wärme von einem Punkt des Wärmeverteilnetzes zu einem anderen Punkt des Wärmeverteilnetzes zu übertragen. Auf diese Weise kann einem Verbraucher Nutzwärme zugeführt werden oder überschüssige Wärme abgeführt werden, beispielsweise zur Klimatisierung eines Gebäudes oder zur Kühlung von Maschinen oder Produktionsanlagen. Die vorliegende Beschreibung beschreibt die Erfindung anhand eines Fernwärmenetzes. Dies dient jedoch lediglich zur Erläuterung der vorliegenden Erfindung und soll den Schutzgegenstand nicht auf ein Fernwärmenetz beschränken. Auch die zentrale Bereitstellung von "Fernkälte" stellt eine Anwendung der Erfindung dar.

Der Wärmeträger, welcher in der Vorlaufleitung zum Verbraucher transportiert und von dort über die Rücklaufleitung wieder abgeführt wird, kann in einigen Ausführungsformen der Erfindung ein flüssiges Medium sein, beispielsweise ein Heiz- oder Kühlwasser oder ein Thermoöl. In anderen Ausführungsformen der Erfindung kann der Wärmeträger am Ort des Verbrauchers einen Phasenwechsel durchlaufen, um auf diese Weise latente Wärme zu- oder abzuführen. Beispielsweise kann der Wärmeträger Dampf sein, welcher am Ort des Verbrauchers kondensiert und auf diese Weise die Verdampfungswärme freisetzt.

Der Verbraucher kann beispielsweise eine Fernwärmeübergabestation eines Gebäudes sein oder eine solche enthalten. Weiterhin enthält der Verbraucher zumindest einen zugeordneten Speicher, welcher aus dem Wärmeverteilnetz zugeführte Wärme zwischenspeichern kann. Hierzu kann der Speicher beispielsweise einen thermisch isolierten Behälter aufweisen, in welchem eine Teilmenge des flüssigen Wärmeträgers aus dem Wärmeverteilnetz zwischengespeichert werden kann. In anderen Ausführungsformen der Erfindung kann der Speicher ein Phasenwechselmaterial enthalten oder daraus bestehen. Dieses kann durch Wärme aus dem Wärmeverteilnetz verflüssigt werden und beim Erstarren Wärme abgeben, welche vom Verbraucher beispielsweise zur Brauchwassererwärmung oder zur Beheizung verwendbar ist. Das Phasenwechselmaterial kann in einigen Ausführungsformen der Erfindung Paraffin und/oder ein Salzhydrat enthalten.

Erfindungsgemäß wird nun vorgeschlagen, die starre Zuordnung von Kühl- bzw. Heizstation einerseits und Verbraucher andererseits aufzubrechen. Entsprechend wird erfindungsgemäß vorgeschlagen, in zumindest einigen Betriebszuständen Wärme über das Wärmeverteilnetz von einem ersten Verbraucher zu einem zweiten Verbraucher bzw. von einem zweiten Verbraucher zu einem ersten Verbraucher zu übertragen. Durch die kooperative Wärmeverteilung zwischen den Verbrauchern können Verbraucher mit kleineren Speichern bzw. höherem Wärmebedarf Wärme von benachbarten Verbrauchern mit geringerem Wärmebedarf erhalten, ohne dass die zentrale Heizstation Wärme liefern muss. Somit können in Phasen geringen Wärmebedarfes längere Stillstandszeiten der Heizstation toleriert werden, ohne dass die Versorgungssicherheit leidet. Darüber hinaus kann der Abstand bzw. die Rohrleitungslänge der Vorlauf- und/oder Rücklaufleitung zwischen benachbarten Verbrauchern geringer sein als die Rohrleitungslänge zwischen der Heiz- oder Kühlstation und einem Verbraucher. Somit kann durch die kooperative Wärmeverteilung zwischen den Verbrauchern durch geringere Rohrleitungslängen der Wärmeverlust reduziert sein. Schließlich können die Verbraucher in einigen Ausführungsformen der Erfindung zumindest teilweise auch selbst Wärme erzeugen, beispielsweise über Solarkollektoren.

In einigen Ausführungsformen der Erfindung kann zumindest ein Verbraucher ein Bypassventil enthalten, mit welchem die Vorlaufleitung mit der Rücklaufleitung unter Umgehung des Speichers verbindbar ist. Dieses Merkmal hat die Wirkung, dass der zu Beginn der Wärmelieferung an den Verbraucher zugeführte Wärmeträger, welcher aufgrund längerer Standzeiten in der Vorlaufleitung unter die Betriebstemperatur abgekühlt ist, nicht durch den Speicher des Verbrauchers geleitet werden muss. Somit wird ein unerwünschter Wärmeaustrag aus dem Speicher vermieden und der anfänglich kalte Wärmeträger kann bis zum Erreichen der Betriebstemperatur bzw. eines vorgebbaren Sollwertes der Vorlauftemperatur über das Bypassventil unmittelbar der Rücklaufleitung zugeführt werden.

In einigen Ausführungsformen der Erfindung kann zwischen Vorlaufleitung und Speicher zumindest ein Absperrventil angeordnet sein. Ein solches Absperrventil kann einerseits dazu dienen, den zu Beginn der Wärmelieferung noch kalten Wärmeträger aus der Vorlaufleitung vom Speicher fernzuhalten, um einen unerwünschten Wärmeaustrag aus dem Speicher zu vermeiden oder zu reduzieren. Daneben kann das Absperrventil auch dazu dienen, im Falle der Wärmelieferung durch einen Verbraucher die Strömungsrichtung umzukehren und den Wärmeträger durch die Vorlaufleitung aus dem Speicher des Verbrauchers zu entnehmen und diesen der Vorlaufleitung des Wärmeverteilnetzes zuzuführen. Hierzu kann das Absperrventil parallel zu Ein- und Auslass einer Pumpe angeordnet sein.

In einigen Ausführungsformen der Erfindung kann zumindest ein Verbraucher eine Pumpe enthalten, mit welcher ein Wärmeträger aus dem Speicher des Verbrauchers in die Vorlaufleitung förderbar ist. Hierbei kann es sich um eine an sich bekannte Kreiselpumpe, eine Kolbenpumpe oder eine andere, an sich bekannte Pumpe für flüssige Medien handeln. Diese kann dazu dienen, im Falle der Wärmelieferung eines Verbrauchers in das Wärmeverteilnetz die übliche Strömungsrichtung umzukehren und einen Strom des flüssigen Wärmeträgers über die Vorlaufleitung aus dem Verbraucher heraus zu bewirken. Der Wärmeträger wird sodann der Vorlaufleitung des Wärmeverteilnetzes zugeführt und erreicht einen zweiten, abnehmenden Verbraucher über die Vorlaufleitung. Für den zweiten Verbraucher unterscheidet sich somit die Wärmelieferung eines anderen Verbrauchers nicht von der Wärmelieferung einer Heizstation. In jedem Fall wird erwärmter Wärmeträger über die Vorlaufleitung zugeführt.

Da die genannte Pumpe lediglich zur Wärmelieferung erforderlich ist, muss diese nicht zwingend in allen Verbrauchern des Wärmeverteilnetzes vorhanden sein. Vielmehr können auch Verbraucher vorgesehen sein, welche lediglich Wärme abnehmen, selbst aber keine Wärme liefern. In diesem Fall müssen diese nicht zwingend eine Pumpe enthalten.

In einigen Ausführungsformen der Erfindung kann das Wärmeverteilnetz weiterhin eine Heiz- oder Kühlstation und zumindest ein Absperrventil enthalten, mit welchem die Vorlaufleitung und/oder die Rücklaufleitung von der Heiz- oder Kühlstation trennbar ist. Hierdurch wird vermieden, dass die Wärme des abgebenden Verbrauchers an die Heiz- oder Kühlstation geliefert wird und dort ungenutzt ausschließlich zur Erwärmung der Bauteile der Heizstation verpufft. In anderen Ausführungsformen der Erfindung kann das Wärmeverteilnetz weiterhin zumindest ein Absperrventil enthalten, mit welchem ein Leitungsstrang oder ein Teilnetz des Wärmeverteilnetzes vom verbleibenden Teil des Netzes getrennt werden kann, so dass der Wärmeträger nur innerhalb eines Teiles des gesamten Wärmeverteilnetzes zirkuliert.

In einigen Ausführungsformen der Erfindung kann ein weiteres Bypassventil vorhanden sein, welches innerhalb der Heiz- oder Kühlstation die Vorlaufleitung mit der Rücklaufleitung verbindet. Dies erlaubt ein Zirkulieren des Wärmeträgers innerhalb des Wärmeverteilnetzes, auch wenn die Heiz- oder Kühlstation nicht in Betrieb ist.

In einigen Ausführungsformen der Erfindung enthält das Wärmeverteilnetz weiterhin eine Steuer- oder Regeleinrichtung, welche dazu eingerichtet ist, den Betriebszustand zumindest des ersten Verbrauchers und des zweiten Verbrauchers zu beeinflussen. In einigen Ausführungsformen der Erfindung kann die Steuer- oder Regeleinrichtung auch den Betriebszustand der Heiz- oder Kühlstation beeinflussen. In wiederum anderen Ausführungsformen der Erfindung kann die Steuer- oder Regeleinrichtung den Betriebszustand bzw. das Verhalten sämtlicher Verbraucher des Wärmeverteilnetzes beeinflussen.

Die Steuer- oder Regeleinrichtung kann zentral realisiert sein, beispielsweise in einem Rechenzentrum oder als Bestandteil der Heiz- oder Kühlstation. In diesem Fall kann die Steuer- oder Regeleinrichtung mit entsprechenden Datenleitungen mit den Einrichtungen der Verbraucher verbunden sein, um diese entsprechend dem gewünschten Betriebszustand anzusteuern.

In anderen Ausführungsformen der Erfindung kann die Steuer- oder Regeleinrichtung dezentral realisiert sein. Dabei sind in jedem Verbraucher Teile der Steuer- oder Regeleinrichtung vorhanden, welche der Erfassung von Messwerten und der Ansteuerung von Aktoren des jeweiligen Verbrauchers dienen. Die Steuer- oder Regeleinrichtung eines jeden Verbrauchers ist mit der betreffenden Steuer- oder Regeleinrichtung anderer Verbraucher über Datenleitungen verbunden, um Informationen über aktuelle oder einzunehmende Betriebszustände auszutauschen. Hierdurch kann die Steuer- oder Regeleinrichtung eines Verbrauchers auch den Betriebszustand eines benachbarten Verbrauchers beeinflussen.

In wiederum einer anderen Ausführungsform der Erfindung kann die Steuer- oder Regeleinrichtung sowohl zentrale als auch dezentrale Komponenten aufweisen. Dabei sind die einzelnen Steuer- oder Regeleinrichtungen der jeweiligen Verbraucher mit der zentralen Komponente der Steuer- oder Regeleinrichtung vernetzt, so dass zentrale und dezentrale Komponenten zusammen den konkreten Betriebszustand der Verbraucher und optional der Heiz- oder Kühlstation beeinflussen.

Die Steuer- oder Regeleinrichtung kann in an sich bekannter Weise als Hard- oder Software realisiert sein. Hierzu kann die Steuer- oder Regeleinrichtung zumindest einen Mikroprozessor, einen Mikrokontroller, einen programmierbaren Logik-Chip sowie ein Computerprogramm enthalten, welches die gewünschten Regelvorgänge ausführt, wenn dieses auf einem Mikroprozessor ausgeführt wird.

Die Datenleitungen können als Kabelverbindung realisiert sein, beispielsweise über eine Telefonleitung, ein Netzwerkkabel oder einen Lichtwellenleiter. In anderen Ausführungsformen der Erfindung kann es sich um eine drahtlose Datenverbindung wie WLAN, LTE, UMTS oder GSM handeln.

In einigen Ausführungsformen der Erfindung kann zumindest ein Verbraucher zumindest einen Temperatursensor enthalten, mit welchem die Temperatur des Wärmeträgers in der Vorlaufleitung bestimmbar ist. Dieser Temperatursensor kann dazu verwendet werden, eine Förderpumpe innerhalb des Verbrauchers, zumindest ein Absperrventil oder zumindest ein Bypassventil anzusteuern, um auf diese Weise einen unerwünschten Wärmeaustrag aus dem Speicher zu vermeiden oder zu reduzieren und dadurch Wärmeverluste weiter zu minimieren.

In einigen Ausführungsformen der Erfindung kann zumindest ein Verbraucher weiterhin einen Durchflussmesser enthalten, mit welchem der Durchfluss des Wärmeträgers in zumindest einer Leitung bestimmbar ist. Im Zusammenwirken mit der Temperatur des Wärmeträgers kann auf diese Weise die einem Verbraucher zu- oder abgeführte Wärmemenge bestimmt werden. Dies erlaubt eine nochmals verbesserte Steuerung oder Regelung der Wärmeverteilung.

In einigen Ausführungsformen der Erfindung betrifft diese einen Datenträger mit darauf gespeicherten Daten oder eine für die Übersendung über ein Datennetz geeignete, Daten repräsentierende Signalfolge, wobei die Daten ein Computerprogramm repräsentieren, welches ein Verfahren zur Wärmeverteilung innerhalb eines Wärmeverteilnetzes ausführt, wenn das Computerprogramm auf einem Mikroprozessor läuft.

Nachfolgend soll die Erfindung anhand von Figuren und Ausführungsbeispielen näher erläutert werden. Dabei zeigt
Fig. 1 eine erste Ausführungsform eines Wärmeverteilnetzes gemäß der vorliegenden Erfindung.
Fig. 2 zeigt eine zweite Ausführungsform eines Wärmeverteilnetzes gemäß der vorliegenden Erfindung.

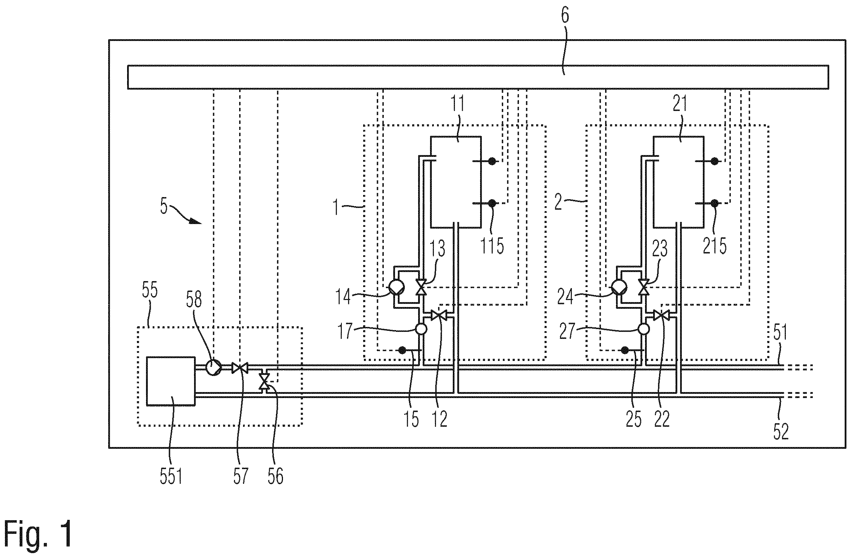

Anhand von Fig. 1 wird eine erste Ausführungsform eines erfindungsgemäßen Wärmeverteilnetzes 5 erläutert. Das Wärmeverteilnetz 5 enthält zumindest einen ersten Verbraucher 1, einen zweiten Verbraucher 2 sowie eine Heiz- oder Kühlstation 55. Die nachfolgende Beschreibung beschränkt sich aus Gründen der Übersichtlichkeit auf ein Fernwärmenetz. Somit wird die zentrale Wärmequelle als Heizstation 55 bezeichnet. Dies soll selbstverständlich die Verwendung einer Wärmesenke eines Fernkältenetzes nicht ausschließen.

Das Wärmeverteilnetz 5 weist eine Vorlaufleitung 51 und eine Rücklaufleitung 52 auf. Vorlauf- und Rücklaufleitung 51 und 52 können beispielsweise als Erdleitung ausgeführt sein, um das Stadtbild nicht zu beeinträchtigen. Im Falle kleinerer Wärmeverteilnetze, beispielsweise auf einem Betriebsgelände, können die Leitungen selbstverständlich auch oberirdisch verlegt sein. Die Vorlaufleitung 51 und die Rücklaufleitung 52 können in an sich bekannter Weise mit einer Dämmung versehen werden, um Wärmeverluste zu reduzieren. Daneben können die Leitungen optional als koaxiale Mantelleitungen verlegt sein oder innerhalb eines gemeinsamen Rohres geführt sein.

Innerhalb der Leitungen 51 und 52 zirkuliert ein Wärmeträger. Dieser kann in einigen Ausführungsformen flüssig sein, beispielsweise ein Heizwasser. Erwärmter Wärmeträger wird den Verbrauchern 1 und 2 über die Vorlaufleitung 51 zugeführt. Dort wird dem Wärmeträger Wärme entnommen. Der auf diese Weise abgekühlte Wärmeträger wird der Rücklaufleitung 52 zugeführt. Von dort gelangt der Wärmeträger wieder zu einer Wärmequelle, um erneut erwärmt zu werden.

In zumindest einem ersten Betriebszustand ist innerhalb der Heizstation 55 das Bypassventil 56 geschlossen und das Absperrventil 57 geöffnet. Durch eine Förderpumpe 58 innerhalb der Heizstation 55 kann flüssiger Wärmeträger über die Vorlaufleitung 51 den Verbrauchern 1 und 2 zugeführt werden. Abgekühlter Wärmeträger verlässt die Verbraucher über die Rücklaufleitung 52 und strömt zurück zur Heizstation 55. Dort wird mit einer Wärmequelle 551 der Wärmeträger wieder auf die Vorlauftemperatur erwärmt.

Die Wärmequelle 551 kann beispielsweise ein Heizkessel, eine Solaranlage oder ein Heizkraftwerk sein. In anderen Ausführungsformen der Erfindung kann die Wärmequelle 551 Abwärme eines industriellen Prozesses für Heizzwecke nutzbar machen.

Innerhalb des ersten Verbrauchers 1 ist bei diesem Betriebszustand das Bypassventil 12 geschlossen, das Absperrventil 13 geöffnet und die Pumpe 14 außer Betrieb. Somit strömt der flüssige Wärmeträger von der Vorlaufleitung 51 in den Speicher 11 und von dort zurück in die Rücklaufleitung 52. Der Speicher 11 kann Wärme speichern, um diese zu einem späteren Zeitpunkt zu nutzen. Gleichzeitig kann die Wärme des Speichers 11 auch sofort zur Raumheizung oder Brauchwassererwärmung eines Gebäudes verwendet werden. Der Speicher 11 kann hierzu beispielsweise ein isoliertes Gefäß enthalten oder daraus bestehen, so dass dort flüssiger Wärmeträger gespeichert werden kann. In anderen Ausführungsformen der Erfindung kann der Speicher 11 ein Latentwärmespeicher sein oder einen solchen enthalten, welcher beispielsweise den Fest/Flüssig-Phasenübergang eines Salzhydrates zur Wärmespeicherung ausnutzt.

Durch optionale Temperatursensoren 15 und 115 kann die Vorlauftemperatur und die Speichertemperatur bestimmt werden. Diese Werte können nachfolgend zur Steuerung des Verbrauchers herangezogen werden. Beispielsweise kann der Wärmeträger in der Vorlaufleitung 51 abkühlen, wenn die Heizstation 55 aus Gründen der Energieersparnis abgeschaltet wird. Bei Wiederinbetriebnahme wird sodann zunächst kalter Wärmeträger 51 an die Verbraucher geliefert. Dieser führt zum Austrag von Wärme aus dem Speicher 11.

Um unerwünschte Wärmeverluste zu vermeiden, kann zu Beginn der Wiederinbetriebnahme des Wärmeverteilnetzes 5 das Absperrventil 13 geschlossen und das Bypassventil 12 geöffnet werden. In diesem Fall wird kalter Wärmeträger aus der Vorlaufleitung 51 unter Umgehung des Speichers 11 unmittelbar der Rücklaufleitung 52 zugeführt. Wenn der Temperatursensor 15 erkennt, dass über die Vorlaufleitung 51 Wärme geliefert wird, kann das Bypassventil 12 geschlossen und das Absperrventil 13 geöffnet werden, um die Wärme dem Speicher 11 zuzuführen, wie vorstehend beschrieben. In einigen Ausführungsformen von der Erfindung kann dies dann der Fall sein, wenn die Vorlauftemperatur am Temperatursensor 15 höher ist als die Speichertemperatur am Sensor 115.

In gleicher Weise ist innerhalb des zweiten Verbrauchers 2 bei diesem Betriebszustand das Bypassventil 22 geschlossen, das Absperrventil 23 geöffnet und die Pumpe 24 außer Betrieb. Somit strömt der flüssige Wärmeträger von der Vorlaufleitung 51 in den Speicher 21 und von dort zurück in die Rücklaufleitung 52. Der Speicher 21 kann Wärme speichern, um diese zu einem späteren Zeitpunkt zu nutzen. Gleichzeitig kann die Wärme des Speichers 21 auch sofort zur Raumheizung oder Brauchwassererwärmung eines Gebäudes verwendet werden. Der Speicher 21 kann hierzu beispielsweise ein isoliertes Gefäß enthalten oder daraus bestehen, so dass dort flüssiger Wärmeträger gespeichert werden kann. In anderen Ausführungsformen der Erfindung kann der Speicher 21 ein Latentwärmespeicher sein oder einen solchen enthalten, welcher beispielsweise den Fest/Flüssig-Phasenübergang eines Salzhydrates zur Wärmespeicherung ausnutzt.

Durch optionale Temperatursensoren 25 und 215 kann die Vorlauftemperatur und die Speichertemperatur bestimmt werden. Diese Werte können nachfolgend zur Steuerung des Verbrauchers herangezogen werden. Beispielsweise kann der Wärmeträger in der Vorlaufleitung 51 abkühlen, wenn die Heizstation 55 aus Gründen der Energieersparnis abgeschaltet wird. Bei Wiederinbetriebnahme wird sodann zunächst kalter Wärmeträger 51 an die Verbraucher geliefert. Dieser führt zum Austrag von Wärme aus dem Speicher 21.

Um unerwünschte Wärmeverluste zu vermeiden, kann zu Beginn der Wiederinbetriebnahme des Wärmeverteilnetzes 5 das Absperrventil 23 geschlossen und das Bypassventil 22 geöffnet werden. In diesem Fall wird kalter Wärmeträger aus der Vorlaufleitung 51 unter Umgehung des Speichers 21 unmittelbar der Rücklaufleitung 52 zugeführt. Wenn der Temperatursensor 25 erkennt, dass über die Vorlaufleitung 51 Wärme geliefert wird, kann das Bypassventil 22 geschlossen und das Absperrventil 23 geöffnet werden, um die Wärme dem Speicher 21 zuzuführen, wie vorstehend beschrieben. In einigen Ausführungsformen von der Erfindung kann dies dann der Fall sein, wenn die Vorlauftemperatur am Temperatursensor 25 höher ist als die Speichertemperatur am Sensor 215.

Wenn während der Stillstandszeiten der Heizstation 55 einer der Verbraucher Wärme benötigt, so wird erfindungsgemäß vorgeschlagen, diese Wärme nicht von der Heizstation 55 liefern zu lassen und diese hierfür aufwendig in Betrieb zu nehmen, sondern zunächst einen Wärmeausgleich zwischen den Verbrauchern herbeizuführen. Dieser Verfahrensablauf wird nachfolgend beschrieben. Beispielhaft soll der zweite Verbraucher 2 Wärme benötigen, wohingegen der erste Verbraucher 1 ausreichend Wärme im Speicher 11 hat, um diese an den zweiten Verbraucher 2 zu liefern.

Im ersten Verfahrensschritt meldet der zweite Verbraucher 2 seinen Wärmebedarf über die Steuer- oder Regeleinrichtung 6. Diese sucht daraufhin im Wärmeverteilnetz nach verfügbarer Wärme, welche an den zweiten Verbraucher 2 geliefert werden kann. Sofern kein alternativer Verbraucher Wärme abgeben kann, wird die Heizstation 55 in Betrieb genommen wie vorstehend beschrieben. Sofern ein anderer Verbraucher oder auch mehrere Verbraucher Wärme abgeben können, so werden die Speicher dieser Verbraucher vorrangig entladen, ehe die Heizstation 55 in Betrieb genommen wird.

Zum Wärmeübertrag des ersten Verbrauchers 1 zum zweiten Verbraucher 2 werden die Ventile 57 und 56 innerhalb der Heizstation geschlossen, um ein Zirkulieren des Wärmeträgers innerhalb des Wärmeverteilnetzes 5 ohne Beteiligung der Heizstation 55 zu ermöglichen.

Sodann werden die Ventile 12 und 13 im ersten Verbraucher sowie das Ventil 23 im zweiten Verbraucher geschlossen. Das Bypassventil 22 des zweiten Verbrauchers 2 wird hingegen geöffnet.

Nachfolgend wird die Pumpe 14 in Betrieb genommen. Dies bewirkt eine Förderung von warmem Wärmeträger aus dem Speicher 11 des ersten Verbrauchers 1 in die Vorlaufleitung 51. Hierdurch wird Wärme aus dem Speicher 11 des ersten Verbrauchers 1 ausgespeichert.

Aufgrund der vorangegangenen Stillstandszeit des Wärmeverteilnetzes 5 ist der Wärmeträger in der Vorlaufleitung 1 abgekühlt. Dieser abgekühlte Wärmeträger wird nun vom nachströmenden Wärmeträger durch die Wirkung der Pumpe 14 verdrängt und dem zweiten Verbraucher 2 zugeführt. Der abgekühlte Wärmeträger strömt durch das Bypassventil 22 in die Rücklaufleitung 52. Hierdurch wird vermieden, dass durch Zufuhr kalten Wärmeträgers die noch im Speicher 21 des zweiten Verbrauchers 2 verbliebene Restwärme ausgespeichert wird und verlorengeht.

Wenn der Temperatursensor 25 des zweiten Speichers 2 eine steigende Temperatur am Vorlauf erfasst, ist die Wärme aus dem ersten Verbraucher 1 am Vorlauf des zweiten Verbrauchers 2 angekommen. Sodann wird das Bypassventil 22 geschlossen und das Absperrventil 23 geöffnet, um die Wärme in den Speicher 21 des zweiten Verbrauchers 2 zu übertragen.

Wenn der Speicher 21 des zweiten Verbrauchers 2 ausreichend Wärme erhalten hat oder aber der Speicher 11 des ersten Verbrauchers 1 nicht mehr ausreichend Wärme liefern kann, wird der Betrieb der Pumpe 14 eingestellt.

Durch den erfindungsgemäßen Wärmeausgleich zwischen den Verbrauchern 1 und 2 lässt sich somit ein erneutes Einschalten der Heizstation 55 vermeiden oder zumindest die Abschaltphasen des Wärmeverteilnetzes verlängern.

Sofern ein Verbraucher 1 selbst Wärme erzeugt, beispielsweise durch Solarthermiekollektoren, können Übertemperaturen im Speicher 11 dieses Verbrauchers 1 vermieden werden, indem überschüssige Wärme über das Wärmeverteilnetz 5 an benachbarte Verbraucher 2 in der beschriebenen Weise abgegeben wird. Hierdurch lassen sich Stagnationszeiten der Solarthermiekollektoren verkürzen und der Ertrag der Solarthermiekollektoren besser nutzen.

Sofern auch benachbarte Verbraucher 2 keine Wärme mehr aufnehmen können, kann in einigen Betriebszuständen das Bypassventil 56 geöffnet werden, um Wärme an die Rohrleitungen 51, 52 des Wärmeverteilnetzes 5 abzugeben und so die Wärmekapazität des Netzes als zusätzlichen Wärmespeicher zu nutzen. Bei Wiederinbetriebnahme des Netzes muss dieses dann nicht von der Heizstation 55 erwärmt werden.

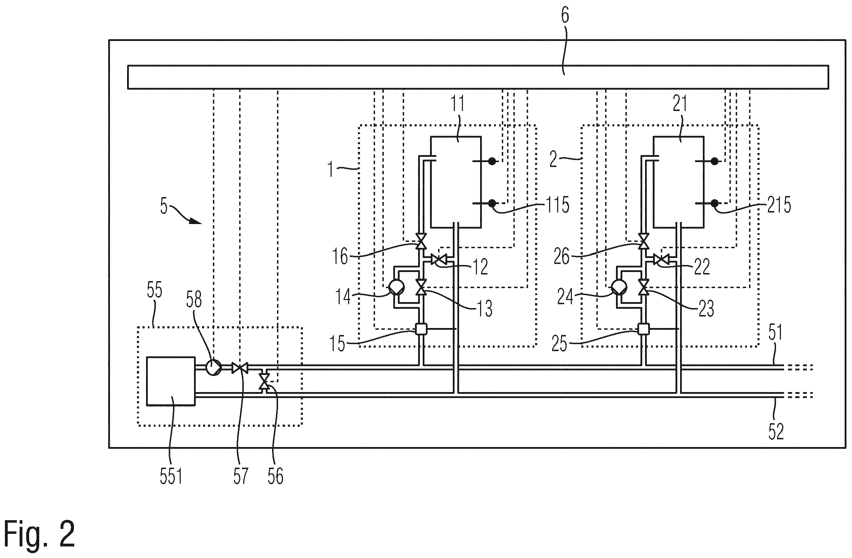

Anhand von Fig. 2 wird eine zweite Ausführungsform der Erfindung erläutert. Gleiche Bestandteile der Erfindung sind mit gleichen Bezugszeichen versehen, so dass sich die folgende Beschreibung auf die wesentlichen Unterschiede beschränkt.

Die Verbraucher 1 und 2 gemäß der zweiten Ausführungsform der Erfindung zeichnen sich durch ein zusätzliches Absperrventil 16 aus, welches zwischen dem Einlass der Pumpe 14 und der Mündung der Vorlaufleitung in den Speicher 11 angeordnet ist. Darüber hinaus sitzt das Bypassventil 12 bzw. 22 an anderer Stelle, nämlich ebenfalls zwischen dem Einlass der Pumpe 14 bzw. 24 und der Rücklaufleitung 52.

In einem ersten Betriebszustand kann Wärme von der Heizstation 55 an die Verbraucher 1 und 2 geliefert werden, wie vorstehend beschrieben.

Zu Beginn des Wärmeübertrages zwischen dem ersten Verbraucher 1 und dem zweiten Verbraucher 2 werden die Ventile 16, 22 und 23 geöffnet. Die Ventile 13, 12, 26, 56 und 57 sind geschlossen. Sodann fördert die Pumpe 14 den Wärmeträger aus dem Speicher 11 des ersten Verbrauchers 1 in die Vorlaufleitung 51. Der in der Vorlaufleitung 51 verbliebene kalte Wärmeträger kann über das Absperrventil 23 und das Bypassventil 22 in die Rücklaufleitung 52 entweichen. Wenn der Temperatursensor 25 erkennt, dass Wärme geliefert wird, wird das Bypassventil 22 geschlossen und das Absperrventil 26 geöffnet, um die Wärme dem Speicher 21 des zweiten Verbrauchers 2 zuzuführen.

Wird nun der Betrieb der Pumpe 14 eingestellt, wie vorstehend in Zusammenhang mit dem ersten Ausführungsbeispiel beschrieben, verbleibt Wärme ungenutzt in der Vorlaufleitung 51. Diese wird nachfolgend an die Umgebung abgegeben und ist verloren. Gemäß der zweiten Ausführungsform der Erfindung wird daher vorgeschlagen, vor dem Abschalten der Pumpe 14 das Absperrventil 16 im ersten Verbraucher 11 zu schließen und das Bypassventil 12 zu öffnen. Sodann fördert die Pumpe 14 kalten Wärmeträger aus der Rücklaufleitung 52 in die Vorlaufleitung 51. Der nachströmende kalte Wärmeträger transportiert die in der Vorlaufleitung 51 verbliebene Wärme zum zweiten Verbraucher 2. Erst wenn der Temperatursensor 25 im zweiten Verbraucher 2 erkennt, dass keine Wärme mehr geliefert wird, sondern lediglich kalter Wärmeträger aus der Vorlaufleitung 51 nachströmt, wird die Pumpe 14 abgeschaltet und die Wärmelieferung ist damit beendet.

Im zeitlichen Verlauf der Vorlauftemperatur zeigt sich somit zunächst ein niedriger Wert, der während des Verfahrens auf einen Maximalwert ansteigt und danach wieder auf einen niedrigen Wert abfällt. Der erste Verbraucher 1 liefert somit einen Wärmeimpuls an den zweiten Verbraucher 2.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Aus-führungsform der Erfindung vorhanden ist. Dies schließt die Anwesenheit weiterer Merkmale nicht aus. Sofern die Ansprüche und die vorstehende Beschreibung "erste" und "zweite" Aus-führungsformen definieren, so dient diese Bezeichnung der Unterscheidung zweier gleichartiger Ausführungsformen, ohne eine Rangfolge festzulegen.

## Patentansprüche

1. Wärmeverteilnetz (5) mit zumindest einer Vorlaufleitung (51) und zumindest einer Rücklaufleitung (52) und mit zumindest einem ersten Verbraucher (1) und zumindest einem zweiten Verbraucher (2), welche jeweils einen zugeordneten Speicher (11, 21) enthalten, **dadurch gekennzeichnet, dass**
diese dazu eingerichtet sind, Wärme über das Wärmeverteilnetz (5) von einem Verbraucher (1, 2) zum anderen Verbraucher (2, 1) zu übertragen.

2. Wärmeverteilnetz nach Anspruch 1, **dadurch gekennzeichnet, dass** zumindest ein Verbraucher ein Bypassventil (12, 22) enthält, mit welchem die Vorlaufleitung (51) mit der Rücklaufleitung (52) unter Umgehung des Speichers (11, 21) verbindbar ist.

3. Wärmeverteilnetz nach Anspruch 1 oder 2, **dadurch gekennzeichnet, dass** zwischen Vorlaufleitung (51) und Speicher (11, 21) zumindest ein Absperrventil (13, 23) angeordnet ist.

4. Wärmeverteilnetz nach einem der Ansprüche 1 bis 3,
**dadurch gekennzeichnet, dass** zumindest ein Verbraucher eine Pumpe (14, 24) enthält, mit welcher ein Wärmeträger aus dem Speicher (11, 21) des Verbrauchers (1, 2) in die Vorlaufleitung (51) förderbar ist.

5. Wärmeverteilnetz nach einem der Ansprüche 1 bis 4, weiterhin enthaltend eine Heiz- oder Kühlstation (55) und zumindest ein Absperrventil (56, 57), mit welchem die Vorlaufleitung (51) und/oder die Rücklaufleitung (52) von der Heiz- oder Kühlstation (55) trennbar ist.

6. Wärmeverteilnetz nach einem der Ansprüche 1 bis 5, weiterhin enthaltend eine Steuer- oder Regeleinrichtung (6), welche dazu eingerichtet ist, den Betriebszustand zumindest des ersten Verbrauchers (1) und des zweiten Verbrauchers (2) zu beeinflussen.

7. Wärmeverteilnetz nach einem der Ansprüche 1 bis 6,
**dadurch gekennzeichnet, dass** die Verbraucher (1, 2) zumindest einen Temperatursensor (15, 25) enthalten, mit welchem die Temperatur des Wärmeträgers in der Vorlaufleitung bestimmbar ist.

8. Verfahren zur Wärmeverteilung innerhalb eines Wärmeverteilnetzes, bei welchem in einem ersten Betriebstzustand zwischen einem zweiten Verbraucher (2) und einer Heiz- oder Kühlstation (55) Wärme übertragen wird, **dadurch gekennzeichnet, dass**
in einem zweiten Betriebszustand Wärme zwischen einem ersten Verbraucher (1) und dem zweiten Verbraucher (2) übertragen wird.

9. Verfahren nach Anspruch 8, **dadurch gekennzeichnet, dass** im zweiten Betriebszustand die Vorlaufleitung (51) und/oder die Rücklaufleitung (52) mit zumindest einem Absperrventil (56, 57) von der Heiz- oder Kühlstation (55) getrennt ist.

10. Verfahren nach einem der Ansprüche 8 oder 9, **dadurch gekennzeichnet, dass** im zweiten Betriebszustand im zweiten Verbraucher (2) die Vorlaufleitung (51) mit der Rücklaufleitung (52) über ein Bypassventil (22) verbunden wird, bis die Temperatur des Wärmeträgers in der Vorlaufleitung einen vorgebbaren Schwellenwert erreicht hat.

11. Verfahren nach einem der Ansprüche 8 bis 10, **dadurch gekennzeichnet, dass** im zweiten Betriebszustand im ersten Verbraucher eine Pumpe (14) betrieben wird, mit welcher ein Wärmeträger aus dem Speicher (11) des ersten Verbrauchers (1) in die Vorlaufleitung (51) gefördert wird.

12. Verfahren nach Anspruch 11, **dadurch gekennzeichnet, dass** nach Entnahme einer vorgebbaren Wärmemenge aus dem Speicher (11) des ersten Verbrauchers (1) die Vorlaufleitung (51) mit der Rücklaufleitung (52) über ein Bypassventil (12) verbunden wird und die Pumpe (14) den Wärmeträger aus der Rücklaufleitung (52) in die Vorlaufleitung (51) fördert.

13. Verfahren nach einem der Ansprüche 8 bis 12, **dadurch gekennzeichnet, dass** zumindest der Betriebszustand des ersten Verbrauchers (1) und des zweiten Verbrauchers (2) mit einer Steuer- oder Regeleinrichtung (6) beeinflusst wird.

14. Verfahren nach einem der Ansprüche 8 bis 13, **dadurch gekennzeichnet, dass** die übertragene Wärmemenge in zumindest einem Verbraucher (1, 2) bestimmt wird.

15. Verfahren nach einem der Ansprüche 8 bis 14, **dadurch gekennzeichnet, dass** die Pumpe (14) des ersten Verbrauchers (1) abgeschaltet wird, wenn die die Temperatur des Wärmeträgers in der Vorlaufleitung des zweiten Verbrauchers (2) einen vorgebbaren Schwellenwert erreicht hat.
